# EUROPÄISCHE PATENTSCHRIFT

(11) **EP 0 619 905 B1**
(45) Veröffentlichungstag und Bekanntmachung des Hinweises auf die Patenterteilung: **19.07.1995**
(21) Anmeldenummer: 93901727.3
(22) Anmeldetag: 29.12.1992
(51) Int. Cl.: G06T 7/60, G06K 9/20

(54) **VERFAHREN UND ANORDNUNG ZUR OPTISCHEN QUALITÄTSKONTROLLE UND/ODER KLASSIFIKATION VON PFLANZEN**
PROCESS AND ARRANGEMENT FOR OPTICAL QUALITY CONTROL AND/OR CLASSIFICATION OF PLANTS
PROCEDE ET DISPOSITIF DE CONTROLE DE LA QUALITE ET/OU DE CLASSIFICATION OPTIQUES DE PLANTES

(30) Priorität: 01.01.1992 DE 4200001
(43) Veröffentlichungstag der Anmeldung: 19.10.1994
(73) Patentinhaber: Massen, Robert, Prof. Dr., D-78337 Öhningen (DE)
(72) Erfinder: Massen, Robert, Prof. Dr., D-78337 Öhningen (DE)
(74) Vertreter: Leiser, Gottfried, Dipl.-Ing.
(86) Internationale Anmeldenummer: EP9203005
(87) Internationale Veröffentlichungsnummer: WO9313491

(56) Entgegenhaltungen:
- WO-A-90/10273
- PATENT ABSTRACTS OF JAPAN vol. 15, no. 230 (P-1214) 12. Juni 1991 & JP-A-30 70 086 (TOSHIBA CORPORATION) 26 March 1991

## Beschreibung

Die Erfindung betrifft ein Verfahren zur automatischen optischen Qualitätskontrolle und/oder Klassifikation von Pflanzen, bei welchem von einer elektronischen Farbkamera ein Bild von einer durch eine zugeordnete erste Beleuchtungsquelle beleuchteten Pflanze in einer ersten Aufnahmerichtung aufgenommen wird, die von der Farbkamera gelieferten elektrischen Bildsignale des aufgenommenen Farbbildes bildpunktweise digitalisiert werden und die digitalisierten Bildsignale durch einen Farbbildrechner ausgewertet werden, sowie eine Anordnung zur Durchführung des Verfahrens.

Ein Verfahren dieser Art ist aus der PCT-Veröffentlichung WO 90/10273 bekannt. Bei diesem bekannten Verfahren werden die von der Farbkamera gelieferten und digitalisierten Bildsignale bildpunktweise nach vorgegebenen Farbklassen klassifiziert. Der Farbbildrechner segmentiert das Bild der Pflanze vom Bild des Hintergrunds aufgrund der Zugehörigkeit der Bildpunkte zu den vorgegebenen Farbklassen, und er ermittelt aus dem segmentierten Bild der Pflanze geometrische Formmerkmale und Farbmerkmale, die zur Ableitung eines Qualitätsmaßes ausgewertet werden. Die Bestimmung der Höhe der Pflanze, die ebenfalls ein wichtiges Merkmal für die Qualitätskontrolle und Klassifikation ist, erfolgt nach diesem bekannten Verfahren durch eine Stereoanordnung von zwei in einem definierten Abstand voneinander angeordneten Farbkameras, deren digitalisierte und in Bildspeichern gespeicherte Stereobilder vom Farbbildrechner nach dem Verfahren der Stereo-Triangulation ausgewertet werden.

Die Ermittlung der Höhe einer Pflanze mit Hilfe einer Stereoanordnung von zwei Farbkameras ist ein recht teures und von der Rechenzeit her anspruchsvolles Verfahren, das allerdings notwendig ist, wenn die Pflanzen nur von oben aufgenommen werden können. In manchen Fällen, z. B. wenn die Pflanzen vereinzelt an einer Beobachtungsstation vorbeigeführt werden, wäre es zwar möglich, die Pflanze von der Seite aufzunehmen und die Höhe der Pflanze aus dieser Seitenaufnahme zu bestimmen; in der Regel kann jedoch nicht auf die Bestimmung von Farbmerkmalen der Pflanze durch eine Farbaufnahme von oben verzichtet werden, wodurch das Problem entsteht, daß Licht von der für die Seitenaufnahme erforderlichen Beleuchtung nach oben in die Farbkamera reflektiert wird und die Farbauswertung stört, und in gleicher Weise Licht von der für die Farbaufnahme von oben erforderlichen Beleuchtung in die für die Seitenaufnahme verwendete Kamera reflektiert wird und deren Funktion beeinträchtigt.

Aus den "Patent Abstracts of Japan", Vol. 15, No. 230 (P-1214), 12. Juni 1991, und der entsprechenden JP-A 3070086 (Toshiba Corporation), 26. März 1991, ist ein Verfahren zur Erkennung bestimmter Merkmale von Pflanzen, wie Knoten und Knospen, mit Hilfe des Lichtschnittverfahrens bekannt. Hierzu wird durch einen Lichtprojektor eine Linie auf die vor einer Referenzfläche angeordnete Pflanze projiziert und mittels einer elektronischen Kamera aufgenommen. Durch die Projektion der Linie wird in dem von der Kamera aufgenommenen Bild die dritte Dimension eines Pflanzenteils erkannt, so daß unabhängig von der Farbe Merkmale der Pflanze erkannt werden können, die sich durch ihre Höhe bezüglich der Referenzfläche voneinander unterscheiden. Bei diesem bekannten Verfahren wird die Pflanze mit einer einzigen elektronischen Kamera in einer einzigen Richtung aufgenommen.

Aufgabe der Erfindung ist demgegenüber die Schaffung eines Verfahrens und einer Anordnung zur optischen Qualitätskontrolle und/oder Klassifikation von Pflanzen, die die Bestimmung von Merkmalen der Pflanze durch Aufnahmen aus unterschiedlichen Richtungen ohne gegenseitige Beeinträchtigung ermöglichen.

Zur Lösung dieser Aufgabe ist das Verfahren der eingangs angegebenen Art nach der Erfindung dadurch gekennzeichnet, daß von einer elektronischen Grauwertkamera ein Bild von der durch eine zugeordnete zweite Beleuchtungsquelle beleuchteten Pflanze in einer von der ersten Aufnahmerichtung verschiedenen zweiten Aufnahmerichtung aufgenommen wird, die von der Grauwertkamera gelieferten elektrischen Bildsignale digitalisiert werden und die digitalisierten Bildsignale des aufgenommenen Grauwertbildes durch einen Grauwertbildrechner zur Bestimmung von Merkmalen der Pflanze ausgewertet werden, die aus dem in der ersten Aufnahmerichtung aufgenommenen Farbbild nicht gewonnen werden können, wobei die für jede Aufnahmerichtung erforderliche Beleuchtungsquelle die Aufnahme in der anderen Richtung dadurch nicht beeinträchtigt, daß entweder jede Kamera für das Licht der der anderen Kamera zugeordneten Beleuchtungsquelle nicht empfindlich ist oder die beiden Beleuchtungsquellen abwechselnd eingeschaltet werden, wobei jede Kamera die Aufnahme dann auslöst, wenn die der Kamera zugeordnete Beleuchtungsquelle eingeschaltet ist.

Eine Anordnung zur automatischen optischen Qualitätskontrolle und/oder Klassifikation von Pflanzen, mit einer elektronischen Farbkamera, die so angeordnet ist, daß sie ein Farbbild einer Pflanze in einer ersten Aufnahmerichtung aufnehmen kann, einer der Farbkamera zugeordneten ersten Beleuchtungsquelle und mit einem Farbbildrechner zur Auswertung der von der Farbkamera gelieferten elektrischen Bildsignale, enthält nach der Erfindung eine elektronische Grauwertkamera, die so angeordnet ist, daß sie ein Grauwertbild der gleichen Pflanze in einer von der ersten Aufnahmerichtung verschiedenen zweiten Aufnahmerichtung aufnehmen kann, eine der Grauwertkamera zugeordnete zweite Beleuchtungsquelle und einen Grauwertbildrechner zur Auswertung der von der Grauwertkamera gelieferten elektrischen Bildsignale zur Bestimmung von Merkmalen der Pflanze, die aus dem in der ersten Aufnahmerichtung aufgenommenen Farbbild nicht gewonnen werden können, wobei die für jede Aufnahmerichtung erforderliche Beleuchtungsquelle die Aufnahme in der anderen Richtung dadurch nicht beeinträchtigt, daß entweder jede Kamera für das Licht der der anderen Kamera zugeordneten Beleuchtungsquelle nicht empfindlich ist oder eine Steuerschaltung die beiden Beleuchtungsquellen abwechselnd einschaltet und die Aufnahme der Pflanze durch jede Kamera jeweils in einem Zeitintervall auslöst, in dem nur die der Kamera zugeordnete Beleuchtungsquelle eingeschaltet ist.

Da die Farbkamera bei dem aus der PCT-Veröffentlichung WO 90/10273 bekannten Verfahren die Pflanze von oben aufnimmt, ist die nach der Erfindung vorgesehene Grauwertkamera vorzugsweise so angeordnet, daß sie die Pflanze von der Seite aufnimmt. Die von der Grauwertkamera stammenden digitalisierten Bildsignale können dann insbesondere zur Bestimmung der Höhe der Pflanze ausgewertet werden, sowie zur Bestimmung weiterer Merkmale der Pflanze, die aus der von oben aufgenommenen Farbaufnahme nicht gewonnen werden können. Das Verfahren ermöglicht auch die Ermittlung von Kriterien zur Qualitätsbeurteilung der Pflanze durch Verknüpfung von Merkmalen, die aus dem von der Farbkamera aufgenommenen Farbbild gewonnen werden, mit Merkmalen, die aus dem von der Grauwertkamera aufgenommenen Grauwertbild gewonnen werden.

Weitere Merkmale und Vorteile der Erfindung ergeben sich aus der folgenden Beschreibung von Ausführungsbeispielen anhand der Zeichnungen. In den Zeichnungen zeigen:
- Fig. 1: eine schematische Darstellung einer Anordnung zur optischen Qualitätskontrolle und/oder Klassifikation von Pflanzen nach der Erfindung,
- Fig. 2: eine abgeänderte Ausführungsform der Anordnung von Fig. 1 und
- Fig. 3: Zeitdiagramme von Signalen, die in der Anordnung von Fig. 2 verwendet werden.

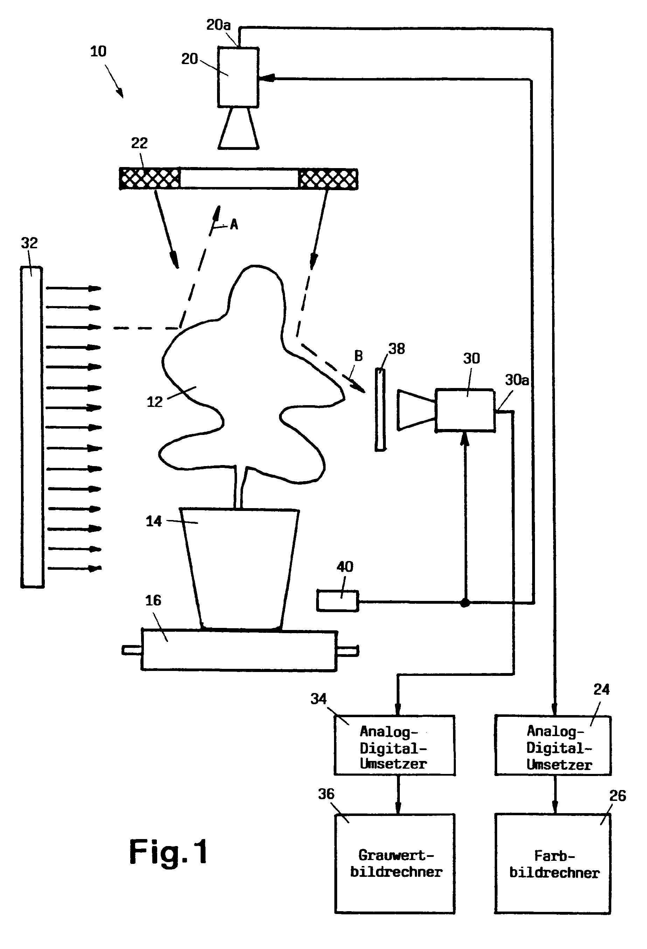

Fig. 1 zeigt schematisch eine Anordnung 10 zur Farbklassifikation und Höhensortierung von Topfpflanzen. Die Topfpflanzen, von denen eine schematisch bei 12 in ihrem Topf 14 dargestellt ist, werden mittels einer Fördereinrichtung 16 einzeln der Reihe nach durch die Anordnung 10 hindurchbewegt; in Fig. 1 ist die Bewegungsrichtung senkrecht zur Zeichenebene. Die Anordnung 10 enthält eine elektronische Farbkamera 20, die so angeordnet ist, daß sie ein Bild jeder Pflanze senkrecht von oben aufnehmen kann; hierzu wird die Pflanze vorzugsweise durch eine Weißlicht-Beleuchtungsquelle 22 von oben beleuchtet. Zur Erzielung einer gleichmäßigen Ausleuchtung der Pflanze kann die Weißlicht-Beleuchtungsquelle 22 beispielsweise, wie in Fig. 1 angedeutet ist, ringförmig ausgebildet und so angeordnet sein, daß die Farbkamera 20 das Bild der Pflanze durch die Mittelöffnung der Weißlicht-Beleuchtungsquelle 22 hindurch aufnimmt. Die Farbkamera 20 setzt in bekannter Weise das aufgenommene Bild in elektrische Bildsignale um, die sie an ihrem Ausgang 20a abgibt. Diese Bildsignale werden in einem Analog-Digital-Umsetzer 24 bildpunktweise digitalisiert und einem Farbbildrechner 26 zugeführt. Der Farbbildrechner 26 wertet die digitalisierten Bildsignale mit Hilfe einer programmgesteuerten Farbbildverarbeitung zur Farbklassifikation der Pflanze aus, vorzugsweise nachdem ein vollständiges digitales Farbbild der Pflanze in einem im Farbbildrechner 26 enthaltenen Bildspeicher gespeichert worden ist. Diese Auswertung kann nach einem bekannten Verfahren erfolgen, beispielsweise nach dem in der PCT-Veröffentlichung WO 90/10273 beschriebenen Verfahren; sie wird daher hier nicht näher erläutert.

Die Anordnung 10 enthält ferner eine elektronische Grauwertkamera 30, die so angeordnet ist, daß sie ein Bild jeder Pflanze von der Seite her, also quer zur Aufnahmerichtung der Farbkamera 20 und quer zur Bewegungsrichtung der Pflanze, aufnehmen kann.Zu diesem Zweck wird die Pflanze 12 mittels einer schmalbandigen Beleuchtungsquelle 32 flächenmäßig beleuchtet. Die Grauwertkamera 30 setzt in bekannter Weise das aufgenommene Bild in elektrische Grauwert-Bildsignale um, die sie an ihrem Ausgang 30a abgibt. Diese Grauwert-Bildsignale werden in einem Analog-Digital-Umsetzer 34 bildpunktweise digitalisiert und einem Grauwertbildrechner 36 zugeführt. Vorzugsweise ist der Grauwertkamera 30 ein schmalbandiges Lichtfilter 38 vorgeschaltet, dessen Durchlaßbereich auf den Spektralbereich der schmalbandigen Beleuchtungsquelle 32 abgestimmt ist, so daß die Grauwertkamera 30 nur auf das von dieser Beleuchtungsquelle stammende Licht anspricht.

In Fig. 1 ist die schmalbandige Beleuchtungsquelle 32 auf der der Grauwertkamera 30 entgegengesetzten Seite der Pflanze 12 angeordnet, so daß die Grauwertkamera 30 ein Durchlichtbild der Pflanze aufnimmt. Alternativ kann die Beleuchtungsquelle 32 auch auf der gleichen Seite der Pflanze wie die Grauwertkamera 30 angeordnet sein, so daß die Grauwertkamera 30 ein Auflichtbild der Pflanze aufnimmt. Die Beleuchtungsquelle 32 kann in diesem Fall beispielsweise ähnlich wie die Weißlicht-Beleuchtungsquelle 22 ringförmig ausgebildet sein. Der der Beleuchtungsquelle entgegengesetzte Hintergrund der Pflanze ist dann zweckmäßigerweise durch ein in dem Spektralbereich der Beleuchtungsquelle entweder sehr stark oder sehr schwach reflektierendes Material gebildet. Im Fall eines sehr stark reflektierenden Hintergrundes erscheint dann das Bild der Pflanze dunkel auf hellem Hintergrund, während im Fall eines sehr schwach reflektierenden Hintergrundes das Bild der Pflanze hell auf dunklem Hintergrund erscheint.

Für die Kameras 20 und 30 können alle bekannten elektronischen Kameras verwendet werden, die optische Bilder in elektrische Bildsignale umsetzen können, beispielsweise auch die üblichen Fernseh- oder Videokameras. Vorzugsweise sind diese Kameras Matrix-Kameras, insbesonder CCD-Matrixkameras, die jeweils ein flächenhaftes Bild der Pflanze aufnehmen. Die Bildaufnahme kann durch einen in der Zeichnung schematisch dargestellten Näherungssensor 40 ausgelöst werden, wenn eine Topfpflanze die richtige Position relativ zu den Kameras erreicht hat. Alternativ können beide Kameras oder eine davon als Zeilenkamera ausgebildet sein, die so orientiert ist, daß die Zeilenrichtung quer zur Förderrichtung der Pflanze verläuft, also in Fig. 1 parallel zur Zeichenebene. Die Bildaufnahme geschieht in diesem Fall durch Einlesen zahlreicher Zeilenabtastungen der bewegten Pflanze, welche vom Bildrechner zu einem Matrixbild zusammengesetzt werden. Umgekehrt ist es auch möglich, daß die Pflanze während der Aufnahme stillsteht und die Zeilenkamera an der Pflanze vorbeibewegt wird. Solche Verfahren der Bildgewinnung sind dem Fachmann der digitalen Bildverarbeitung bekannt (siehe z. B. Ahlers/ Warnekke: Industrielle Bildverarbeitung, Addison-Wesley 1991).

Vorzugsweise besteht die schmalbandige Beleuchtungsquelle 32 aus einer NIR-Beleuchtungsquelle (Nahes Infra-Rot); solche NIR-Beleuchtungsquellen werden kostengünstig z.B. für Video-Überwachungsanlagen hergestellt. In diesem Fall wird das Lichtfilter 38 als NIR-Durchlaßfilter (sog. Langpaß-Filter) ausgelegt. Da die in der Farbkamera 20 üblicherweise vorhandenen Farbfilter den NIR-Bereich ausschließen, stören unvermeidliche Reflexionen des von der schmalbandigen Beleuchtungsquelle 32 stammenden Lichtes, wie sie durch den Strahl A angedeutet sind, die Farbaufnahme nicht. Umgekehrt ist die Grauwertkamera 30 wegen des vorgeschalteten NIR-Durchlaßfilters 38 unempfindlich für Weißlicht, so daß Lichteinstreuungen von oben, wie sie durch den Strahl B angedeutet sind, die Seitenaufnahme nicht stören. Die Verwendung einer NIR-Beleuchtung hat ferner den Vorteil, daß übliche CCD-Kameras in diesem Bereich besonders empfindlich sind.

Aus dem mit der Grauwertkamera 30 aufgenommene Grauwertbild, das die Pflanze in Seitenansicht darstellt, werden diejenigen für die Qualitätskontrolle und Klassifikation der Pflanze nützlichen Merkmale ermittelt, welche sich aus der Farbaufnahme von oben nicht oder nicht allein ergeben. Ein solches Merkmal ist in erster Linie die Höhe der Pflanze. Zur Höhenbestimmung kann beispielsweise mit Hilfe der digitalen Bildverarbeitung in dem im Bildspeicher des Grauwertbildrechners 36 gespeicherten digitalisierten Grauwertbild vom oberen Bildrand her die Bildzeile mit dem ersten signifikanten Kontrastsprung zwischen dem Grauwert des Hintergrundes und dem Grauwert der Pflanze ermittelt werden. Der Abstand dieser Bildzeile von der stets gleichbleibenden bekannten Bildzeile, in der sich die Auflagefläche der Fördereinrichtung 16 befindet, ergibt unter Berücksichtigung des bekannten Abbildungsmaßstabs die Gesamthöhe von Pflanze und Topf, und wenn die Höhe des Topfes bekannt ist, erhält man die Höhe der Pflanze aus der Differenz zwischen Gesamthöhe und Topfhöhe. Bei wechselnden Topfhöhen kann von unten ausgehend auch die Höhe des Topfes bestimmt werden, indem mit Methoden der digitalen Bildverarbeitung der Kontrastsprung zwischen dem Grauwert des Topfes und dem Grauwert des Hintergrundes ermittelt wird.

Ferner können Merkmale, die aus dem gespeicherten Grauwertbild der Seitenansicht im Grauwertbildrechner 36 ermittelt werden, mit Merkmalen verknüpft werden, die aus dem gespeicherten Farbbild der Oberansicht im Farbbildrechner 26 ermittelt werden, um Eigenschaften der Pflanze zu bestimmen, die mit einer der Kameras allein nicht gewonnen werden können. Beispielsweise kann durch Auszählen der Bildpunkte mit den der Pflanze zugeordneten Grauwerten im Grauwertbildrechner 36 die Projektionsfläche der Pflanze von der Seite und durch Auszählen der Bildpunkte mit den der Pflanze zugeordneten Farbklassen im Farbbildrechner 26 die Projektionsfläche der Pflanze von oben bestimmt werden. Durch Verknüpfung dieser beiden Werte kann ein Näherungswert für das Volumen der Pflanzenkrone erhalten werden. Die Verknüpfung kann beispielsweise die Bildung des gewichteten Produkts der beiden Werte sein.

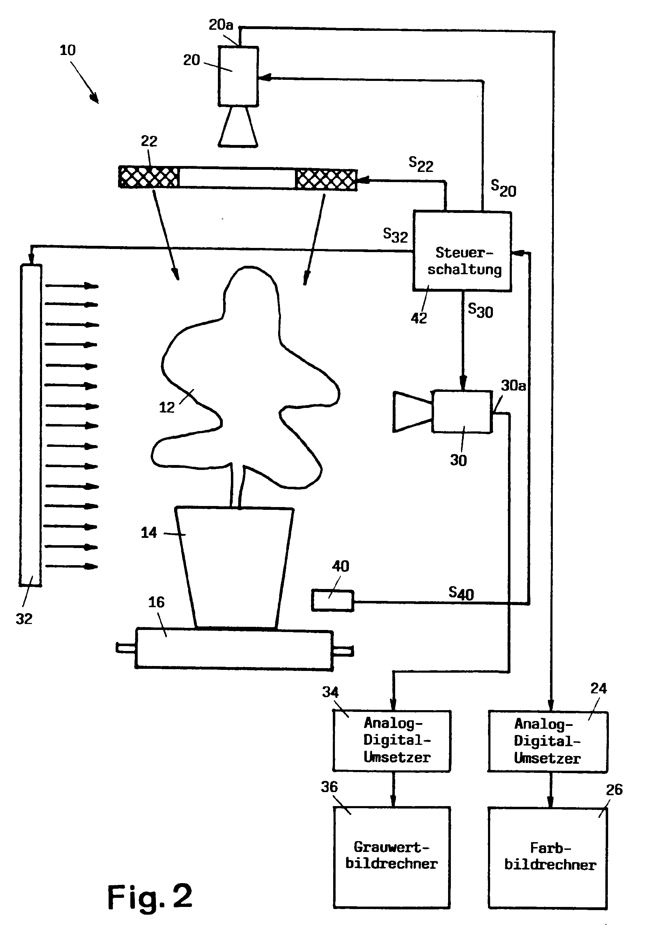

Eine wesentliche Bedingung für ein brauchbares Erfassen und Auswerten von Bildern der Pflanze, die aus verschiedenen Richtungen aufgenommen werden, besteht darin, daß die für jede Aufnahmerichtung erforderliche Beleuchtung die Aufnahme in der anderen Richtung nicht beeinträchtigt. Bei der Anordnung von Fig. 1 ist diese Bedingung dadurch erfüllt, daß die für die beiden Aufnahmerichtungen verwendeten Beleuchtungsquellen Licht in unterschiedlichen Spektralbereichen emittieren und daß die beiden Kameras so ausgebildet sind, daß sie jeweils nur auf das von der zugeordneten Beleuchtungsquelle stammende Licht und nicht auf das von der anderen Beleuchtungsquelle stammende Licht ansprechen. Fig. 2 zeigt eine abgeänderte Ausführungsform der Anordnung von Fig. 1, bei der die zuvor genannte Bedingung auch dann erfüllt werden kann, wenn die für die beiden Aufnahmerichtungen verwendeten Beleuchtungsquellen Licht im gleichen Spektralbereich emittieren.

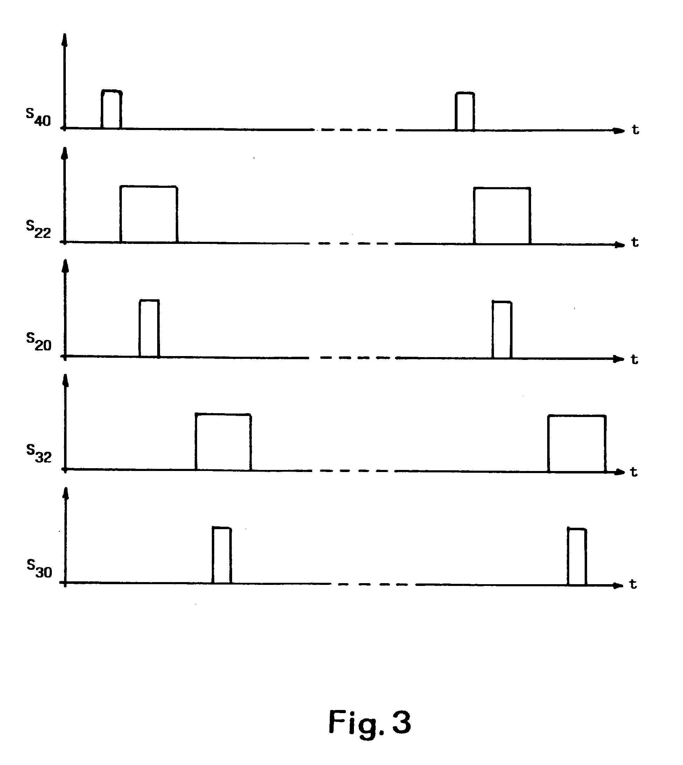

In Fig. 2 sind die Bestandteile, die denjenigen von Fig. 1 entsprechen, mit den gleichen Bezugszeichen wie in Fig. 1 bezeichnet; diese Bestandteile werden nicht nochmals erläutert. Zusätzlich ist eine Steuerschaltung 42 vorgesehen, die das vom Näherungssensor 40 gelieferte Signal empfängt und Steuersignale zu den Kameras 20, 30 und zu den Beleuchtungsquellen 22, 32 schickt. Die Funktionsweise dieser Anordnung wird an Hand von Fig. 3 erläutert, die Zeitdiagramme des vom Näherungssensor 40 gelieferten Signals S₄₀, der von der Steuerschaltung 42 zu den Beleuchtungsquellen 22 und 32 geschickten Steuersignale S₂₂ bzw. S₃₂ und der von der Steuerschaltung 42 zu den Kameras 20 und 30 geschickten Steuersignale S₂₀ bzw. S₃₀ zeigt.

Nach jedem Empfang eines Signals S₄₀, das anzeigt, daß eine Pflanze die richtige Aufnahmeposition erreicht hat, schickt die Steuerschaltung 42 zunächst ein Steuersignal S₂₂ zu der Beleuchtungsquelle 22 für die Farbaufnahme von oben. Die Beleuchtungsquelle 22 emittiert Licht nur während der Zeitdauer, in der das Steuersignal S₂₂ den hohen Signalwert hat. Während dieser Zeitdauer schickt die Steuerschaltung 42 ein Steuersignal S₂₀ zu der Farbkamera 20, die somit ein Farbbild mit dem von der Beleuchtungsquelle 22 stammenden Licht aufnimmt, während die Beleuchtungsquelle 32 abgeschaltet ist. Erst wenn die Beleuchtungsquelle 22 erloschen ist, schickt die Steuerschaltung 42 ein Steuersignal S₃₂ zu der Beleuchtungsquelle 32 und ein Steuersignal S₃₀ zu der Grauwertkamera 30, die nunmehr ein Grauwertbild ausschließlich mit dem von der Beleuchtungsquelle 32 stammenden Licht aufnimmt. Auf diese Weise werden zwei zeitlich gegeneinander versetzte Bildaufnahmen mit stroboskopischer Beleuchtung durch die beiden Beleuchtungsquellen 22 und 32 gewonnen. Da bei jeder Aufnahme immer nur eine Beleuchtungsquelle und eine Kamera aktiv ist, wird die Aufnahme nicht durch reflektierte Lichtstrahlen gestört, die von der anderen Beleuchtungsquelle stammen, selbst wenn die Kamera für den Spektralbereich des von der anderen Beleuchtungsquelle stammenden Lichtes empfindlich ist. Deshalb kann bei der Anordnung von Fig. 2 das Lichtfilter 38 entfallen, das bei der Anordnung von Fig. 1 der Grauwertkamera 30 vorgeschaltet ist.

Wenn die Pflanze während des Zeitintervalls zwischen den beiden Aufnahmen weiterbewegt wird, können die beiden Kameras um die entsprechende Strecke gegeneinander versetzt sein, damit sich die Pflanze bei jeder Aufnahme in der richtigen Aufnahmeposition befindet.

Ein Driften der Eigenschaften der Farbkamera 20, der zugehörigen Kameraelektronik und/oder der Beleuchtungsquelle 22 kann zur Folge haben, daß die für bestimmte Objektfarben erhaltenen Farbvektoren in dem aufgenommenen Farbbild von den der Farbklassifikation zugrundegelegten ursprünglichen Farbvektoren abweichen. Um Fehler zu vermeiden, die durch solche Abweichungen bei der Qualitätskontrolle und Klassifikation der Pflanzen verursacht werden können, wird vorzugsweise im Blickfeld der Farbkamera 20 eine Anordnung von Farbreferenzen so angeordnet, daß sie bei jeder Aufnahme eines Farbbildes mit aufgenommen wird. Die den Farbreferenzen entsprechenden ursprünglichen Farbvektoren sind im Farbbildrechner 26 abgespeichert. Bei jeder Aufnahme eines Farbbildes werden die Farbvektoren der den Farbreferenzen entsprechenden Bildbereiche mit den abgespeicherten Farbvektoren verglichen, und wenn Abweichungen festgestellt werden, werden den Farbvektoren des gesamten Farbbildes Korrekturen erteilt, die diese Abweichungen beseitigen. Die Korrekturgröße, um die jeder Farbvektor geändert wird, kann im einfachsten Fall die Differenz zwischen dem für eine Farbreferenz erhaltenen Farbvektor und dem entsprechenden abgespeicherten Farbvektor sein.

In entsprechender Weise können Abweichungen der Grauwerte korrigiert werden, die durch ein Driften der Eigenschaften der Grauwertkamera 30, der zugehörigen Kameraelektronik und/ oder der Beleuchtungsquelle 32 verursacht werden. Zu diesem Zweck wird im Blickfeld der Grauwertkamera 30 eine Anordnung von Grauwertreferenzen so angeordnet, daß sie bei jeder Aufnahme eines Grauwertbildes mit aufgenommen wird. Die den Grauwertreferenzen zugeordneten ursprünglichen Grauwerte sind im Grauwertbildrechner 36 abgespeichert und werden bei jeder Aufnahme eines Grauwertbildes mit den für die Grauwertreferenzen erhaltenen Grauwerten verglichen. Wenn dieser Vergleich Abweichungen ergibt, werden den Grauwerten des gesamten Grauwertbildes Korrekturen erteilt, die diese Abweichungen beseitigen. Die Korrekturgröße, um die jeder Grauwert geändert wird, kann im einfachsten Fall wieder die Differenz zwischen dem für eine Grauwertreferenz erhaltenen Grauwert und dem entsprechenden abgespeicherten Grauwert sein.

## Patentansprüche

1. Verfahren zur automatischen optischen Qualitätskontrolle und/oder Klassifikation von Pflanzen, bei welchem von einer elektronischen Farbkamera (20) ein Bild von einer durch eine zugeordnete erste Beleuchtungsquelle (22) beleuchteten Pflanze (12) in einer ersten Aufnahmerichtung aufgenommen wird, die von der Farbkamera (20) gelieferten elektrischen Bildsignale des aufgenommenen Farbbildes bildpunktweise digitalisiert werden und die digitalisierten Bildsignale durch einen Farbbildrechner (26) ausgewertet werden, dadurch gekennzeichnet, daß von einer elektronischen Grauwertkamera (30) ein Bild von der durch eine zugeordnete zweite Beleuchtungsquelle (32) beleuchteten Pflanze in einer von der ersten Aufnahmerichtung verschiedenen zweiten Aufnahmerichtung aufgenommen wird, die von der Grauwertkamera (30) gelieferten elektrischen Bildsignale digitalisiert werden und die digitalisierten Bildsignale des aufgenommenen Grauwertbildes durch einen Grauwertbildrechner (36) zur Bestimmung von Merkmalen der Pflanze (12) ausgewertet werden, die aus dem in der ersten Aufnahmerichtung aufgenommenen Farbbild nicht gewonnen werden können, wobei die für jede Aufnahmerichtung erforderliche Beleuchtungsquelle (22, 32) die Aufnahme in der anderen Richtung dadurch nicht beeinträchtigt, daß entweder jede Kamera (20, 30) für das Licht der der anderen Kamera (30 bzw. 20) zugeordneten Beleuchtungsquelle (32 bzw. 22) nicht empfindlich ist oder die beiden Beleuchtungsquellen (22, 32) abwechselnd eingeschaltet werden, wobei jede Kamera (20, 30) die Aufnahme dann auslöst, wenn die der Kamera zugeordnete Beleuchtungsquelle (22, 32) eingeschaltet ist.

2. Verfahren nach Anspruch 1, dadurch gekennzeichnet, daß die Farbkamera (20) die Pflanze (12) von oben und die Grauwertkamera (30) die Pflanze (12) von der Seite aufnimmt.

3. Verfahren nach Anspruch 2, dadurch gekennzeichnet, daß die von der Grauwertkamera (30) stammenden digitalisierten Bildsignale zur Bestimmung der Höhe der Pflanze (12) ausgewertet werden.

4. Verfahren nach Anspruch 3, dadurch gekennzeichnet, daß die Höhe der Pflanze (12), ausgehend vom oberen Bildrand, aus dem ersten signifikanten Kontrastsprung zwischen dem Bild der Pflanze (12) und dem Bild des Hintergrundes ermittelt wird.

5. Verfahren nach Anspruch 3 oder 4, dadurch gekennzeichnet, daß bei einer Topfpflanze (12) die Höhe des Pflanzentopfes (14) aus dem Kontrastsprung zwischen dem Bild des oberen Topfrandes und dem Bild des Hintergrundes ermittelt wird.

6. Verfahren nach einem der vorhergehenden Ansprüche, dadurch gekennzeichnet, daß Kriterien zur Qualitätsbeurteilung der Pflanzen (12) durch Verknüpfung von Merkmalen, die aus dem von der Farbkamera (20) aufgenommenen Farbbild gewonnen werden, mit Merkmalen, die aus dem von der Grauwertkamera (30) aufgenommenen Grauwertbild gewonnen werden, ermittelt werden.

7. Verfahren nach Anspruch 6, dadurch gekennzeichnet, daß aus dem mittels der Farbkamera (20) aufgenommenen Farbbild die Projektionsfläche der Pflanzenkrone von oben und aus dem mittels der Grauwertkamera (30) aufgenommenen Grauwertbild die Projektionsfläche der Pflanzenkrone von der Seite ermittelt werden und daß ein Näherungswert für das Volumen der Pflanzenkrone aus dem gewichteten Produkt der beiden Projektionsflächen gebildet wird.

8. Verfahren nach einem der Ansprüche 1 bis 7, dadurch gekennzeichnet, daß im Blickfeld der Farbkamera (20) eine Anordnung von Farbreferenzen so angeordnet ist, daß sie bei jeder Aufnahme eines Farbbildes mit aufgenommen wird, daß die den Farbreferenzen entsprechenden richtigen Farbvektoren im Farbbildrechner gespeichert sind, daß die Farbvektoren der den Farbreferenzen entsprechenden Bildbereiche eines aufgenommenen Farbbildes zur Feststellung von Abweichungen mit den gespeicherten Farbvektoren verglichen werden und daß die Farbvektoren des aufgenommenen Farbbildes im Sinne einer Beseitigung der Abweichungen korrigiert werden.

9. Verfahren nach einem der Ansprüche 1 bis 8, dadurch gekennzeichnet, daß im Blickfeld der Grauwertkamera (30) eine Anordnung von Grauwertreferenzen so angeordnet ist, daß sie bei jeder Aufnahme eines Grauwertbildes mit aufgenommen wird, daß die den Grauwertreferenzen entsprechenden richtigen Grauwerte im Grauwertbildrechner gespeichert sind, daß die Grauwerte der den Grauwertreferenzen entsprechenden Bildbereiche eines aufgenommenen Grauwertbildes zur Feststellung von Abweichungen mit den gespeicherten Grauwerte verglichen werden und daß die Grauwerte des aufgenommenen Grauwertbildes im Sinne einer Beseitigung der Abweichungen korrigiert werden.

10. Anordnung zur automatischen optischen Qualitätskontrolle und/oder Klassifikation von Pflanzen, mit einer elektronischen Farbkamera (20), die so angeordnet ist, daß sie ein Farbbild einer Pflanze (12) in einer ersten Aufnahmerichtung aufnehmen kann, einer der Farbkamera (20) zugeordneten ersten Beleuchtungsquelle (22) und mit einem Farbbildrechner (26) zur Auswertung der von der Farbkamera (20) gelieferten elektrischen Bildsignale, gekennzeichnet durch eine elektronische Grauwertkamera (30), die so angeordnet ist, daß sie ein Grauwertbild der gleichen Pflanze (12)in einer von der ersten Aufnahmerichtung verschiedenen zweiten Aufnahmerichtung aufnehmen kann, eine der Grauwertkamera (30) zugeordnete zweite Beleuchtungsquelle (32) und einen Grauwertbildrechner (36) zur Auswertung der von der Grauwertkamera (30) gelieferten elektrischen Bildsignale zur Bestimmung von Merkmalen der Pflanze, die aus dem in der ersten Aufnahmerichtung aufgenommenen Farbbild nicht gewonnen werden können, wobei die für jede Aufnahmerichtung erforderliche Beleuchtungsquelle (22, 32) die Aufnahme in der anderen Richtung dadurch nicht beeinträchtigt, daß entweder jede Kamera (20, 30) für das Licht der der anderen Kamera (30 bzw. 20) zugeordneten Beleuchtungsquelle (32 bzw. 22) nicht empfindlich ist oder eine Steuerschaltung (40) die beiden Beleuchtungsquellen (22, 32) abwechselnd einschaltet und die Aufnahme der Pflanze durch jede Kamera (20, 30) jeweils in einem Zeitintervall auslöst, in dem nur die der Kamera (20, 30) zugeordnete Beleuchtungsquelle (22, 32) eingeschaltet ist.

11. Anordnung nach Anspruch 10, dadurch gekennzeichnet, daß die erste Beleuchtungsquelle (22) eine Weißlichtquelle ist, daß die zweite Beleuchtungsquelle (32) eine schmalbandige Lichtquelle ist, deren Spektrum außerhalb des Empfindlichkeitsbereichs der Farbkamera (20) liegt, und daß die Grauwertkamera (30) so ausgebildet ist, daß sie nur in dem schmalen Spektralbereich der zweiten Beleuchtungsquelle (32) empfindlich ist.

12. Anordnung nach Anspruch 11, dadurch gekennzeichnet, daß das schmalbandige Spektrum der zweiten Beleuchtungsquelle (32) im nahen Infrarotbereich liegt.

13. Anordnung nach Anspruch 11 oder 12, dadurch gekennzeichnet, daß der Grauwertkamera (30) ein optisches Filter (38) vorgeschaltet ist, dessen Durchlaßbereich auf den Spektralbereich der zweiten Beleuchtungsquelle (32) abgestimmt ist.

14. Anordnung nach einem der Ansprüche 10 bis 13, dadurch gekennzeichnet, daß wenigstens eine der beiden Kameras (20, 30) eine Matrixkamera ist.

15. Anordnung nach einem der Ansprüche 10 bis 13, dadurch gekennzeichnet, daß wenigstens eine der beiden Kameras (20, 30) eine Zeilenkamera ist und daß die Bildaufnahme durch die Aufnahme einer Vielzahl von aufeinanderfolgenden Bildzeilen während einer Relativbewegung zwischen der Pflanze (12) und der Kamera (20, 30) erfolgt.

16. Anordnung nach Anspruch 15, dadurch gekennzeichnet, daß die Kamera (20, 30) feststehend ist und die Pflanze (12) während der Aufnahme kontinuierlich an der Kamera (20, 30) vorbeibewegt wird.

17. Anordnung nach Anspruch 15, dadurch gekennzeichnet, daß die Pflanze (12) während der Aufnahme feststehend ist und die Kamera (20, 30) während der Aufnahme kontinuierlich an der Pflanze (12) vorbeibewegt wird.

18. Anordnung nach einem der Ansprüche 10 bis 17, dadurch gekennzeichnet, daß die der Grauwertkamera (30) zugeordnete zweite Beleuchtungsquelle (32) die Pflanze (12) von der der Grauwertkamera (30) entgegengesetzten Seite beleuchtet, so daß die Grauwertkamera (30) ein Durchlichtbild der Pflanze (12) aufnimmt.

19. Anordnung nach einem der Ansprüche 10 bis 17, dadurch gekennzeichnet, daß die der Grauwertkamera (30) zugeordnete zweite Beleuchtungsquelle (32) die Pflanze (12) in der Aufnahmerichtung der Grauwertkamera (30) beleuchtet, so daß die Grauwertkamera (30) ein Auflichtbild der Pflanze aufnimmt, und daß der Hintergrund auf der entgegengesetzten Seite der Pflanze (12) ein Reflexionsvermögen aufweist, das von dem Reflexionsvermögen der Pflanze (12) deutlich verschieden ist.

## Claims

1. A method for the automatic quality control and/or classification of plants, in which an electronic color camera (20) is employed to produce an image of a plant (12) illuminated by a first associated source (22) of illumination in a first image taking direction, the electrical image signals of the taken color image supplied by the color camera (20) are digitized pixelwise and the digitized image signals are evaluated by a color image computer (26), characterized in that an image of the plant, which is illuminated by a second associated source (32) of illumination, is taken by an electronic half-tone camera (30) in a second image taking direction, which is different from the first image taking direction, the electrical image signals supplied by the half-tone camera (30) are digitized and the digitized image signals of the half-tone image taken are evaluated by a half-tone image computer (36) in order to determine features of the plant (12) which are not available from the color image taken in the first image taking direction, and in that the source (22, 32) of illumination necessary for each image taking direction does not interfere with image taking in the other direction because either each camera (20, 30) is insensitive to the light from the source (32 or 22, respectively) of illumination associated with the other camera (30 or 20, respectively) or because the two sources (22, 32) of illumination are switched on alternatingly, each camera (20, 30) triggering the taking of an image when the source (22, 32) of illumination associated with the camera is switched on.

2. The method as claimed in claim 1, characterized in that the color camera (20) takes an image of the plant (12) from above and the half-tone camera (30) one of the plant (12) from the side.

3. The method as claimed in claim 2, characterized in that the digitized image signals from the half-tone camera (30) are evaluated in order to determine the height of the plant (12).

4. The method as claimed in claim 3, characterized in that the height of the plant (12), starting at the upper margin of the image, is determined on the basis of the first significant contrast discontinuity between the image of the plant (12) and the image of the background.

5. The method as claimed in claim 3 or claim 4, characterized in that in the case of a pot plant (12) the height of the plant pot (14) is determined on the basis of the contrast discontinuity between the image of the upper margin of the pot and the image of the background.

6. The method as claimed in any one of the preceding claims, characterized in that criteria for assessment of quality of the plant (12) are determined by linking features which are obtained from the color image taken by the color camera (20), with features which are obtained from the half-tone image produced by the half-tone camera (30).

7. The method as claimed in claim 6, characterized in that the projection area of the crown of the plant from above is determined from the color image taken by means of the color camera (20) and the projection area of the plant crown from the side is determined from the half-tone image taken by means of the half-tone camera (30), and that an approximation is formed for the volume of the plant crown on the basis of the weighted product of the two projection areas.

8. The method as claimed in any one of claims 1 to 7, characterized in that an arrangement of color references is so located in the field of view of the color camera (20) that it is photographed each time a color image is taken, in that the correct color vectors corresponding to the color references are stored in the color computer, in that the color vectors of the image parts, corresponding to the color references, of a color image taken are compared with the stored color vectors in order to determine departures from the stored color vectors, and in that the color vectors of the color image taken are corrected in the sense of removing the departures.

9. The method as claimed in any one of the claims 1 to 8, characterized in that an arrangement of half-tone references is so located in the field of view of the half-tone camera (30) that it is photographed each time a half-tone image is taken, in that the correct gray scale values corresponding to the half-tone references are stored in the half-tone computer, in that the gray scale values of the image parts corresponding to the half-tone references are compared with the stored gray scale values in order to determine departures from the stored gray scale values, and in that the gray scale values of the half-tone image taken are corrected in the sense of removing the departures.

10. An arrangement for the automatic optical quality control and/or classification of plants, comprising an electronic color camera (20) which is so arranged that it can take a color image of a plant (12) in a first image taken direction, a first source (22) of illumination associated with the color camera (20) and a color image computer (26) for the evaluation of the electrical image signals supplied by the color camera (20), characterized by an electronic half-tone camera (30) which is so arranged that it can take a half-tone image of the same plant (12) in a second image taking direction different from the first image taking direction, a second source (32) of illumination associated with the half-tone camera (30) and a half-tone computer (36) for the evaluation of the electrical image signals supplied by the half-tone camera (30) for the determination of features of the plant which are not available from the color image taken in the first image taking direction, wherein the source (22, 32) of illumination necessary for each image taking direction does not interfere with image taking in the other direction due to the fact that either each camera is insensitive to the light of the source (32 or 22, respectively) of illumination associated with the other camera or a control device (40) alternatingly switches on the two sources (22, 32) of illumination and causes each camera (20, 30) to take an image of the plant in a time interval in which only the source (22, 32) of illumination associated with the camera (20, 30) is switched on.

11. The arrangement as claimed in claim 10, characterized in that the first source (22) of illumination is a white light source, in that the second source (32) of illumination is a narrow-band light source whose spectrum is outside the range of sensitivity of the color camera (20), and in that the half-tone camera (30) is so designed that it is solely sensitive in the narrow spectral range of the second source (32) of illumination.

12. The arrangement as claimed in claim 11, characterized in that the narrow-band spectrum of the second source (32) of illumination is in the near infrared range.

13. The arrangement as claimed in claim 11 or in claim 12, characterized in that the half-tone camera (30) is provided with an optical filter (38) whose pass range is matched to the spectral range of the second source (32) of illumination.

14. The arrangement as claimed in any one of the claims 10 to 13, characterized in that at least one of the two cameras (20, 30) is a matrix camera.

15. The arrangement as claimed in any one of the claims 10 to 13, characterized in that at least one of the two cameras (20, 30) is a line camera and in that the taking of an image is performed by taking a plurality of consecutive image lines during a relative movement between the plant (12) and the camera (20, 30).

16. The arrangement as claimed in claim 15, characterized in that the camera (20,30) is stationary and the plant (12) is continuously moved past the camera (20, 30) while the image is taken.

17. The arrangement as claimed in claim 15, characterized in that the plant (12) is stationary while the image is taken and the camera (20, 30) is continuously moved past the plant (12) while the image is taken.

18. The arrangement as claimed in any one of the claims 10 to 17, characterized in that the second source (32) of illumination associated with the half-tone camera (30) illuminates the plant from the side opposite to the half-tone camera (30) so that the half-tone camera (30) takes a transmitted light image of the plant (12).

19. The arrangement as claimed in any one of the claims 10 to 17, characterized in that the second source (32) of illumination associated with the half-tone camera (30) illuminates the plant (12) in the image taking direction of the half-tone camera (30) so that the half-tone camera (30) takes a reflected light image of the plant, and in that the background on the opposite side of the plant (12) has a reflectivity which is substantially different to the reflectivity of the plant (12).

## Revendications

1. Procédé de contrôle optique automatique de qualité et/ou de classification automatique de plantes, dans lequel une caméra couleur électronique (20) prend, dans une première direction de prise de vue, une image d'une plante (12) éclairée par une première source d'éclairage (22) associée, dans lequel les signaux vidéo électriques, fournis par la caméra couleur (20), de l'image couleur prise sont numérisés point d'image par point d'image et les signaux vidéo numérisés sont analysés par un ordinateur d'images couleur (26), procédé caractérisé en ce qu'une caméra électronique de valeurs de gris (30) prend une image de la plante, éclairée par une deuxième source d'éclairage (32), dans une deuxième direction de prise de vue différente de la première direction de prise de vue, en ce que les signaux vidéo électriques fournis par la caméra de valeurs de gris (30) sont numérisés et en ce que les signaux vidéo numérisés de l'image de valeurs de gris qui a été prise sont analysés par un ordinateur d'images de valeurs de gris (36) afin de déterminer des caractéristiques de la plante (12) qui ne peuvent pas être obtenues à partir de l'image couleur prise dans la première direction de prise de vue, la source d'éclairage (22, 32) nécessaire pour chaque direction de prise de vue ne gênant pas la prise de vue dans l'autre direction soit par le fait que chaque caméra (20, 30) n'est pas sensible à la lumière de la source d'éclairage (32 ou 22) associée à l'autre caméra (30 ou 20) soit par le fait que les deux sources d'éclairage (22, 32) sont mises en service de façon alternée, chaque caméra (20, 30) déclenchant la prise de vue quand la source d'éclairage (22, 32) associée à la caméra est mise en service.

2. Procédé selon la revendication 1, caractérisé en ce que la caméra couleur (20) prend une vue de la plante (12) depuis le haut tandis que la caméra de valeurs de gris (30) prend une vue de la plante (12) depuis le côté.

3. Procédé selon la revendication 2, caractérisé en ce que les signaux vidéo numérisés provenant de la caméra de valeurs de gris (30) sont analysés pour déterminer la hauteur de la plante (12).

4. Procédé selon la revendication 3, caractérisé en ce que la hauteur de la plante (12), en partant du bord supérieur de l'image, est déterminée à partir du premier saut de contraste significatif entre l'image de la plante (12) et l'image de l'arrière-plan.

5. Procédé selon la revendication 3 ou 4, caractérisé en ce que, dans le cas d'une plante en pot (12), la hauteur du pot de la plante (14) est déterminée à partir du saut de contraste entre l'image du bord supérieur du pot et l'image de l'arrière-plan.

6. Procédé selon l'une des revendications précédentes, caractérisé en ce que des critères d'appréciation de qualité des plantes (12) sont déterminés par la liaison de caractéristiques qui ont été obtenues à partir de l'image couleur prise par la caméra couleur (20) avec des caractéristiques qui ont été obtenues à partir de l'image de valeurs de gris prise par la caméra de valeurs de gris (30).

7. Procédé selon la revendication 6, caractérisé en ce que, à partir de l'image couleur prise au moyen de la caméra couleur (20), la surface de projection du sommet de la plante est déterminée depuis le haut et en ce que, à partir de l'image de valeur de gris prise au moyen de la caméra de valeurs de gris (30), la surface de projection du sommet de la plante est déterminée depuis le côté et en ce qu'il est formé une valeur approchée du volume du sommet de la plante à partir de la moyenne du produit des deux surfaces de projection.

8. Procédé selon l'une des revendications 1 à 7, caractérisé en ce que, dans le champ visuel de la caméra couleur (20), un dispositif de références de couleurs est disposé de façon à être pris en même temps que chaque prise de vue d'une image couleur, en ce que les vecteurs de couleur corrects correspondant aux références de couleurs sont enregistrés dans l'ordinateur d'images couleur, en ce que les vecteurs de couleurs des zones d'image, correspondant aux références de couleurs, d'une image couleur prise sont comparés au vecteurs de couleurs enregistrés afin de déterminer des écarts et en ce que les vecteurs de couleurs de l'image de couleur prise sont corrigés dans le sens d'une suppression des écarts.

9. Procédé selon l'une des revendications 1 à 8, caractérisé en ce que, dans le champ visuel de la caméra de valeurs de gris (30), un dispositif de références de valeurs de gris est disposé de façon à être pris en même temps que chaque prise de vue d'une image de valeurs de gris, en ce que les valeurs de gris correctes correspondant aux références de valeurs de gris sont enregistrées dans l'ordinateur d'images de valeurs de gris, en ce que les valeurs de gris des zones d'image, correspondant aux références de valeurs de gris, d'une image de valeurs de gris prise sont comparées aux valeurs de gris enregistrées afin de déterminer des écarts et en ce que les valeurs de gris de l'image de valeurs de gris prise sont corrigées dans le sens d'une suppression des écarts.

10. Dispositif de contrôle optique automatique de qualité et/ou de classification automatique de plantes, comprenant une caméra couleur (20) électronique qui est disposée de façon à pouvoir prendre une image couleur d'une plante (12) dans une première direction de prise de vue, une source d'éclairage (22) associée à la caméra couleur (20) et un ordinateur d'images couleur (26) pour l'analyse des signaux vidéo électriques fournis par la caméra couleur (20), dispositif caractérisé par une caméra électronique de valeurs de gris (30) qui est disposée de façon à pouvoir prendre une image de valeurs de gris de la même plante (12) dans une deuxième direction de prise de vue différente de la première direction de prise de vue, par une deuxième source d'éclairage (32) associée à la caméra de valeurs de gris (30) et par un ordinateur de valeurs de gris (36) pour l'analyse des signaux vidéo électriques fournis par la caméra de valeurs de gris (30) en vue de déterminer des caractéristiques de la plante qui ne peuvent pas être obtenues à partir de l'image couleur prise dans la première direction de prise de vue, la source d'éclairage (22, 32) nécessaire à chaque direction de prise de vue ne gênant pas la prise de vue dans l'autre direction soit par le fait que chaque caméra (20, 30) n'est pas sensible à la lumière de la source d'éclairage (32 ou 22) associée à l'autre caméra (30 ou 20) soit par le fait qu'un circuit de commande (40) met en service de façon alternée les deux sources d'éclairage (22, 32) et déclenche la prise de vue de la plante par chaque caméra (20, 30) à chaque fois dans un intervalle de temps pendant lequel seule la source d'éclairage (22, 32) associée à la caméra (20, 30) est mise en service.

11. Dispositif selon la revendication 10, caractérisé en ce que la première source d'éclairage (22) est une source de lumière blanche, en ce que la deuxième source d'éclairage (32) est une source de lumière à bande étroite dont le spectre est situé en dehors de la plage de sensibilité de la caméra couleur (20) et en ce que la caméra de valeurs de gris (30) est constituée de telle façon qu'elle n'est sensible que dans l'étroite plage spectrale de la deuxième source d'éclairage (32).

12. Dispositif selon la revendication 11, caractérisé en ce que le spectre à bande étroite de la deuxième source d'éclairage (32) se situe dans la zone infrarouge proche.

13. Dispositif selon la revendication 11 ou 12, caractérisé en ce qu'un filtre optique (38) est monté en amont de la caméra de valeurs de gris (30), filtre dont la bande passante est adaptée à la plage spectrale de la deuxième source d'éclairage (32).

14. Dispositif selon l'une des revendications 10 à 13, caractérisé en ce qu'au moins une des deux caméras (20, 30) est une caméra matricielle.

15. Dispositif selon l'une des revendications 10 à 13, caractérisé en ce que au moins une des deux caméras (20, 30) est une caméra linéaire et en ce que la prise d'images est effectuée par la prise de vue d'une multiplicité de lignes d'image successives au cours d'un mouvement relatif entre la plante (12) et la caméra (20, 30).

16. Dispositif selon la revendication 15, caractérisé en ce que la caméra (20, 30) est fixe et la plante (12) passe devant la caméra (20, 30) de façon continue pendant la prise de vue.

17. Dispositif selon la revendication 15, caractérisé en ce que la plante (12) est fixe pendant la prise de vue et la caméra (20, 30) passe devant la plante (12) de façon continue pendant la prise de vue.

18. Dispositif selon l'une des revendications 10 à 17, caractérisé en ce que la deuxième source d'éclairage (32) associée à la caméra de valeurs de gris (30) éclaire la plante (12) depuis le côté opposé à la caméra de valeurs de gris (30) de telle façon que la caméra de valeurs de gris (30) prend une image de la plante (12) en lumière transmise.

19. Dispositif selon l'une des revendications 10 à 17, caractérisé en ce que la deuxième source d'éclairage (32) associée à la caméra de valeurs de gris (30) éclaire la plante (12) dans la direction de prise de vue de la caméra de valeurs de gris (30) de telle façon que la caméra de valeurs de gris (30) prend une image de la plante en lumière réfléchie et de telle façon que l'arrière-plan présente, sur le côté opposé de la plante (12), un pouvoir de réflexion qui se distingue nettement du pouvoir de réflexion de la plante (12).
